# EUROPEAN PATENT APPLICATION

(11) **EP 1 631 053 A1**
(43) Date of publication of application: **01.03.2006**
(21) Application number: 05018423.3
(22) Date of filing: 24.08.2005
(51) Int. Cl.: H04N 1/00, G03B 27/52, G03B 27/46

(54) **Photographic film processor**

(30) Priority: 31.08.2004 JP 2004253016
(71) Applicant: FUJI PHOTO FILM CO., LTD., Minami-Ashigara-shi, Kanagawa (JP)
(72) Inventor: Ando, Shigeru, Fuji Photo Film Co., Ltd, Ashigarakami-gun Kanagawa (JP)
(74) Representative: Klunker . Schmitt-Nilson . Hirsch

(57) **Abstract**

A check label (21) on which an order identification number (22) and a bar code (23) thereof are recorded is attached to a leading portion of a photographic film (28) and an envelope for containing the photographic film. Order information is inputted so as to relate to the order identification number. The inputted order information is stored in a storage (7). An automatic film loader (11), a leading-edge sensor (35), a bar-code reader (34), a frame sensor (36) and a first reservoir (12) are disposed at an upstream side of a film carrier (13). The bar-code reader reads the bar code of the check label. On the basis of the read bar code, the storage is searched to obtain the corresponding order information. Processes for printing and for writing image data in a CDR are performed on the basis of the order information.

## Description

### BACKGROUND OF THE INVENTION

### 1. Field of the Invention

The present invention relates to a photographic film processor in which photographic films are fed to a film carrier one by one to produce photographic prints and so forth.

### 2. Description of the Related Art

In some of photographic film processors for digitally processing an image of a photographic film, the image of the photographic film is read by a scanner comprising a CCD line sensor to obtain image data while the photographic film, on which the image is recorded, is carried at a predetermined reading velocity (see Japanese Patent Laid-Open Publication Nos. 11-133519 and 5-188483). The obtained image data is used for recording the image on a recording material and for showing the image on a display.

In an image reader of this kind of the photographic film processor, pre-scanning is performed while the photographic film is unidirectionally carried by carrying roller pairs along a reading passage. During the pre-scanning, the image of the photographic film is read by the line scanner in comparatively low resolution. After confirming a size, a dynamic range and so force of the image recorded on the photographic film, the carrying direction of the photographic film is reversed. While the photographic film is carried in the reverse direction, fine-scanning is performed such that the image of the photographic film is read in high resolution on the basis of data obtained by pre-scanning. In this way, so-called reciprocative scanning is performed. After completion of fine-scanning, the photographic film is discharged to the outside of the film processor or to a film receiver through a film passage connected to the reading passage.

The photographic film carried to the film passage is cut by a film cutter, for example, into a predetermined length corresponding to six frames, four frames and so forth. This cut piece film is inserted into a sheet (film sheet), which has successive film pockets, one after another by an inserter.

The photographic film processor comprises an automatic film loader (AFL) for automatically feeding the photographic film to the reading passage. For instance, the automatic film loader includes a film holder, a feed roller and a carrying roller pair. The film holder is loaded with a film bundle of the stacked photographic films. The feed roller separates the sole photographic film from the film bundle loaded in the film holder to feed this photographic film to a film-feed passage connected to the film passage. The carrying roller pair carries the photographic film to the reading passage along the film-feed passage. The automatic film loader separates the sole photographic film from the uppermost portion or the lowermost portion of the film bundle, which is loaded in the film holder, by the feed roller at predetermined timing. And then, the automatic film loader carries the separated photographic film to the reading passage of a main body of the film processor along the film-feed passage.

In order to surely and efficiently receive an order of photographic prints, it is disclosed in Japanese Patent Laid-Open Publication No. 4-328540 that identification data is magnetically recorded on a leading edge of the photographic film at a time of order reception of the photographic print. Moreover, it is disclosed in Japanese Patent Laid-Open Publication No. 2002-23278 that an original identifier and an image file are saved in a database so as to be related to each other. In virtue of this, it is possible to make reprints without the photographic film at a time of reorder. Further, it is disclosed in Japanese Patent Laid-Open Publication No. 2003-114482 that a check label on which order identification data is recorded is issued. The order identification data is given to the photographic film corresponding to the ordered photographic print. On the basis of the order identification data of the check label, the image data of the photographic film is identified.

By the way, in a printing system, which is used for a small processing station and comprises a film processor, an image input device and an image output device, an operator manually inputs order information with the image input device. The order information concerns a print size, a print number, a kind of a paper surface, an index print, creation of a data CD and so force. The operator inputs the order information by using a keyboard, a mouse and so force, viewing an order input picture of the image input device. At this time, when the photographic films having the same order contents continue, labor is saved by default setting in that reentry of the order information is nor required. In view of this, when setting the photographic films to the automatic film loader, the photographic films having the same order contents are sorted to conduct batch treatment in which the photographic films of the same order contents are collectively set in the automatic film loader. Consequently, preparation for sorting and so forth is needed, and there arises a problem in that it is difficult to effectively perform a printing process. Moreover, since the preparation for sorting and so forth is needed, it is prevented to save labor. Further, if unexpected processing operation is ordered for urgent finish, interrupt finish and so forth, it is impossible to conduct rapid response in the conventional way that the photographic films of the same order contents are collectively set in the automatic film loader. In the meantime, giving the order identification data to the photographic film is described in the above-noted Publication Nos. 4-328540, 2002-23278 and 2003-114482. However, there is no description about relationship between the order identification data and the order information. Thus, there is a problem in that it is difficult to efficiently perform the printing process.

### SUMMARY OF THE INVENTION

In view of the foregoing, it is a primary object of the present invention to provide a photographic film processor in which a printing operation is efficiently performed without preparation of sorting of same order contents.

It is a second object of the present invention to provide a photographic film processor in which it is possible to easily deal with interrupt processing.

In order to achieve the above and other objects, the photographic film processor according to the present invention comprises an order-information inputting device, a storage, a film feeder, an identification-data reader and a controller. The photographic film processor uses a photographic film to which order identification data is attached to identify a print order. In a preferred embodiment, the order identification data is represented by a bar code recorded on a check label, which is attached to a leading portion of the photographic film. Images recorded on the photographic film are read by an image reader, and order processing is performed on the basis of data of the read image. The order-information inputting device is utilized for inputting order information of the print order so as to relate the order information to the order identification data. The storage stores the inputted order information to which the order identification data is annexed. The film feeder feeds the photographic film, which has the attached check label, to the image reader. The identification-data reader is placed at the film feeder to read out the bar code of the check label. The controller reads the order information from the storage on the basis of the order identification data read out by the identification-data reader to perform the order processing in accordance with the order information.

In case that the identification-data reader fails to read the order identification data, it is preferable to read this data again by reciprocating the photographic film. Alternatively, it is preferable that carrying the photographic film is halted and an alarm is raised to urge an operator to input the order identification data. The identification-data reader may be detachable and may be detached in case that the identification-data reader fails to read the data. In this case, it is preferable that the operator manually reads the order identification data with the detached identification-data reader. It is preferable that the film feeder is an automatic film loader for containing strips of the photographic film in a stack state and for automatically feeding the strip. More preferably, the automatic film loader has an additional loading portion into which the photographic film is additionally loaded from a side opposite to a film-feeding side.

According to the present invention, it is unnecessary to sort the photographic films, which have the same order information, in advance so that the printing process is efficiently performed.

Moreover, even if the identification-data reader fails to read the bar code, the bar code is surely read by reciprocating the photographic film, by urging the operator to input the data, or by manually reading the bar code with the detached identification-data reader. Further, since the automatic film loader has the additional loading portion, it is easily dealt with to additionally load the photographic film of urgent processing and interrupt processing.

### BRIEF DESCRIPTION OF THE DRAWINGS

The above objects and advantages of the present invention will become apparent from the following detailed description of the preferred embodiments of the invention when read in conjunction with the accompanying drawings, in which:
Fig. 1 is a schematic illustration showing a photographic film processor according to the present invention;
Fig. 2 is a plan view showing a check label attached to a leading portion of a photographic film;
Fig. 3 is an explanatory illustration showing an example of a list of order information;
Fig. 4 is a flowchart showing an example of algorithm for extracting and judging edge positions of image frames; and
Fig. 5 is a flowchart showing a reading process for a bar code of the check label.

### DETAILED DESCRIPTION OF THE PREFERRED EMBODIMENT(S)

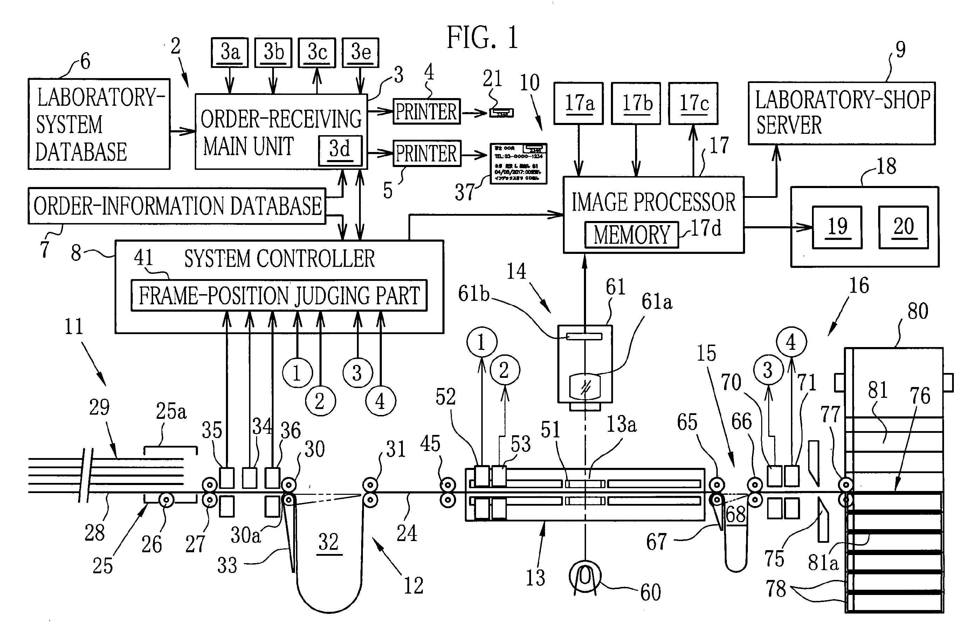

As shown in Fig. 1, a photographic-film processing system according to the present invention comprises an order-receiving unit 2, a system controller 8, a laboratory-shop server 9, an image input unit 10 and an image output machine 18. The order-receiving unit 2 comprises an order-receiving main unit 3, a check-label printer 4, a receipt printer 5, a laboratory-system database 6, and an order-information database 7.

The order-receiving main unit 3 is constituted by a personal computer and comprises a keyboard 3a, a mouse 3b and a display 3c to input the order information. When inputting the order information, one of an operator input mode and a direct input mode is selectable by mode setting. Under the operator input mode, an operator of a shop inputs the order information. Under the direct input mode, an ordering person directly inputs the order information. It is possible to freely designate the mode in accordance with member composition of the laboratory shop. For example, the operator input mode is selected in a case that there is a leeway in the member composition by virtue of a plurality of operators. The direct input mode is selected in a case that a small number of the operators are always tied up with the other operations, and in an unmanned case of nighttime. Incidentally, in the unmanned case, a container slot for receiving and containing a photographic film is adapted to be openable, and the photographic film is dropped through the container slot. The dropped photographic film is contained so as not to be taken out of the container slot. In this kind of the unmanned reception, a check label 21 is issued together with a receipt 37 for the purpose of identifying the photographic film. The ordering person attaches the check label 21 to a photographic film cartridge. At this time, the check label is temporarily attached. In another way, the check label has a twin-label composition and only half thereof is attached. In this case, the other half of the check label is attached to a leading portion of the photographic film later by an operator. It is not exclusive that the ordering person attaches the check label. A film container may have a structure so as to be capable of independently containing the films every order, and receipt identifying data may be allocated to the container.

In both the modes, input items are common. It is possible to input the order information along audio assist and input guidance utilizing the display 3c. It is also possible to input the order information by the keyboard 3a, the mouse 3b and touch-key input utilizing the display 3c. The inputted order information is stored in a memory 3d of the order-receiving main unit 3 together with an order identification number. And then, order contents are displayed within a final confirmation picture, and the order contents are determined by operating a confirmation button. Upon determination of the order contents, data concerning date and time of order reception is loaded from an automatic date function and is stored. After that, the determined order information is sent from the order-receiving main unit 3 to the order-information database 7 and is stored therein.

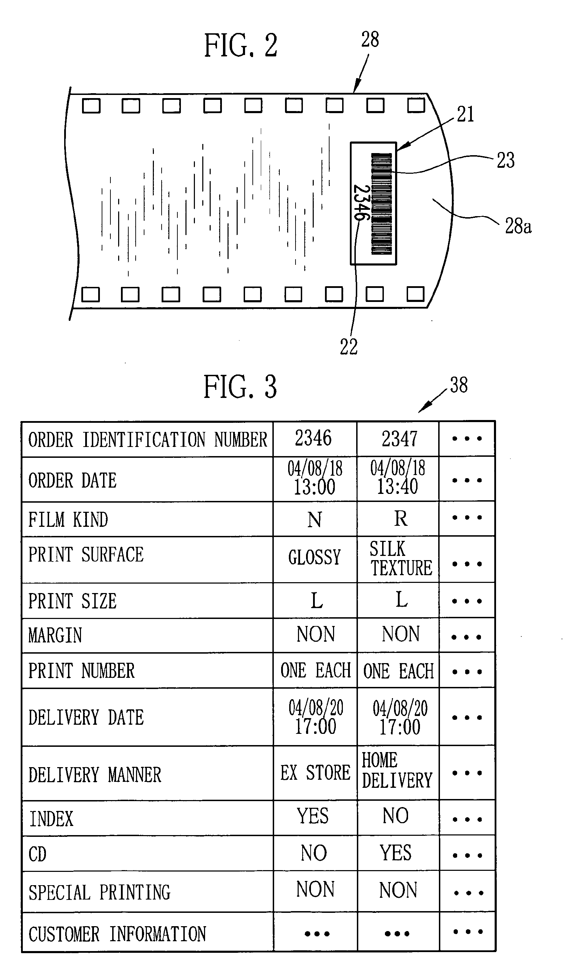

Moreover, upon the determination of the order contents, the check-label printer 4 prints order identification number and a bar code thereof on the check label 21. At this time, the check labels 21 having the same order identification data are printed by a number necessary for the photographic-film processing system. For instance, when an envelope is used, the check labels 21 are printed by two in order to attach them to the envelope and the leading portion of the photographic film. When the envelope is not used, the check label 21 is printed by one and is attached to the leading portion of the photographic film 28, such as shown in Fig. 2. Meanwhile, the receipt printer 5 prints the order identification number, the bar code and the received order contents on the receipt 37. The printed receipt 37 is passed to the ordering person. Incidentally, a single printer may be used as the check label printer 4 and the receipt printer 5. Moreover, the check label 21 and the receipt 37 may be printed on a same sheet. In this case, only the check label 21 is peeled from the sheet and is attached to the photographic film 28.

In the laboratory-system database 6, output services dealt with in the photographic-film processing system of the laboratory shop are inputted in a database style. In addition, output services dealt with in affiliating laboratory shops and a large-scale laboratory shop are also inputted. By mode designation, it is possible to select a local processing mode and an expanded processing mode. Under the local processing mode, only the services, which are dealt with in the laboratory shop concerned, are displayed on the order-receiving main unit 3 to receive the order. Under the expanded processing mode, it is possible to receive the order of the services utilizing the output unit and so forth of the other affiliating shop. Upon selection of the local processing mode, are displayed the domestically-processable services, which concern a kind of a photographic-paper surface, a print size, a write medium and so forth, so as to be capable of receiving the order of these services. Upon selection of the expanded processing mode, it becomes possible to perform printing for a surface kind, a print size and so forth, which are not dealt with in the current shop and are processable in the other shop via a reception processing system of the other shop connected by means of the Internet, a dedicated line and so forth. For instance, it becomes possible to select special printing including twelve-inch-size printing, large-size printing of poster printing to be performed by an ink- jet printer, particular printing to be performed on a mug and a T-shirt, composite printing of an entertainer and a famous building, and so forth.

Fig. 3 shows an example of a list of the order information. The list 38 of the order information includes items regarding the order identification number, the order date, the film type, the surface kind of the photographic paper (color paper), the print size, presence of margin, a print number, a delivery date, a delivery manner, an index print, production of CD and customer information, as need arises. As to the order identification number, four-digit numeral is used. However, the order identification number is not limited to the numeral and may be a combination including other letters of alphabets or the like. Further, the order identification number is not limited to four-digit and may be properly increased or decreased. As to the film type, N representing a negative film and "R" representing a reversal film are used. As to the surface kind of the photographic paper, glossy and silk texture are used. As to the print size, " L" , "2L" , " Half L" , "Panorama" and so forth are used. As to the presence of margin, Margin and "Non-Margin" are used. As to the print number, "One Each" , "Two Each" and so forth are used. Regarding the delivery date, a designated date is written at an order time. Regarding the delivery manner, one of Ex Store" , "Mailing", "Home-Delivery Service" and so force is selected. Regarding the index print, it is written whether the index print is required or not. Regarding the production of CD, it is selected whether the written CD is produced or not. Regarding the special printing, one of the large-size printing, the mug printing, the T-shirt printing, the composite printing and so forth is selected. Further, in the item of the customer information, a telephone number and so forth of the customer are written.

The print size, the print number, the kind of the paper surface and the index print, which are included in the order information, are used during the printing process of the image output machine 18 to perform printing for the photographic paper having the corresponding print size and the designated kind of the paper surface (the glossy or the silk texture). At this time, printing is performed for the photographic papers of the corresponding number. When the index print is required, is produced the index print in which all frames recorded in the photographic film 28 are listed. Moreover, when producing the data CD is required, image data is written in a designated recording medium, which is a CDR for example, after completion of scanning. Incidentally, instead of the CDR, the image data may be written in a DVDR, an IC card and so forth.

As shown in Fig. 1, the image input unit 10 comprises an automatic film loader 11, a first reservoir 12, a film carrier 13, an image reader 14, a second reservoir 15, a film cutting inserter 16 and an image processor 17. The image output machine 18 comprises a laser printer 19 and a processor 20. The automatic film loader 11 comprises a film holder 25, a feed roller 26 and a carrying roller pair 27. The film holder 25 is loaded with a film bundle 29 in which the developed photographic films 28 are stacked. Moreover, the film holder 25 is provided with an additional loading portion 25a so as to be capable of adding the photographic film needing unexpected processing of urgent finish, interrupt finish and so forth. The photographic film 28 is additionally loaded into the additional loading portion 25a from an opposite side of a feeding side. The additional loading portion 25a is provided with a lid and so forth formed on the film holder 25. The automatic film loader 11 having the additional loading portion 25a is described in detail in Japanese Patent Laid-Open Publication No. 2002-182312 filed by the present assignee, for example. Meanwhile, in response to a scan feasible signal received from the film carrier 13, the feed roller 26 is rotated to separate the photographic films 28, which are contained in the film holder 25, one by one. The separated photographic film 28 is sent to the carrying roller pair 27, and is forwarded to the first reservoir 12 by this carrying roller pair 27. Incidentally, reference numeral 24 denotes a film passage.

As shown in Fig. 2, the check label 21 is attached to a leading portion 28a of the photographic film 28 at the time of order reception. The order identification number 22 for identifying the respective orders is recorded on the check label 21. The bar code 23 representing the order identification number is also recorded on the check label 21. In the case using the envelope, the check label 21 having the same number is attached to the envelop (not shown) as well, which contains the photographic film 28 at the time of print order, for the purpose of checking.

As shown in Fig. 1, the first reservoir 12 is constructed so as to form a loop space 32 between two carrying roller pairs 30 and 31. The carrying roller pair 30 of an entrance side is provided with a movable guide 33 , which is coaxially attached to a lower driving roller 30a of the carrying roller pair 30 so as to be rotatable. The movable guide 33 moves between a guide position (shown by a chain double-dashed line) and an evacuation position (shown by a solid line). In the guide position, the movable guide 33 is horizontal to guide a leading edge of the photographic film 28 to the carrying roller pair 31 of an exit side. In the evacuation position, the movable guide 33 is substantially vertical to evacuate from the loop space.

A leading-edge sensor 35, a bar-code reader 34 and a frame sensor 36 are disposed between the carrying roller pair 27 of the film holder 25 and the entrance-side carrying roller pair 30 of the first reservoir 12. The leading-edge sensor 35 detects the leading edge of the photographic film 28 and sends a detection signal of the leading edge to the system controller 8. The bar-code reader 34 reads the bar code 23 of the check label 21 and sends a readout signal of the bar code to the system controller 8. The bar-code reader 34 is identical with that used at a checkout counter of a convenience store or the like. However, a detecting system, an employed light source and so forth of the bar-code reader 34 may be properly changed. On the basis of the readout signal of the bar code, the system controller 8 reads the order information corresponding to the order identification number from a memory 17d of the image processor 17. And then, the system controller 8 performs a printing process in accordance with the read order information, by controlling the respective units on the basis of the read order information.

In order to surely read the bar code 23 with the bar-code reader 34 , the photographic film 28 is adapted to be carried at an appropriate carrying velocity. In this embodiment, the carrying velocity is set so as to be lower at a time when the bar-code reader 34 reads the bar code, in comparison with a time when the photographic film 28 is carried to detect an edge position with the frame sensor 36. Carrying the photographic film 28 at the lower velocity is performed within a predetermined zone, where the check label 21 is attached, after the leading-edge sensor 35 has detected the leading edge of the photographic film 28.

The frame sensor 36 is constituted of four light-receiving sensors of a transmission type, which are disposed within an image-recording area of the photographic film 28 and are separated in a width direction of the photographic film. Signals of the light-receiving sensors are sent to the system controller 8, where a frame-position judging part 41 detects the edge position of each image frame on the basis of density fluctuation obtained by the light-receiving sensors in a longitudinal direction of the photographic film.

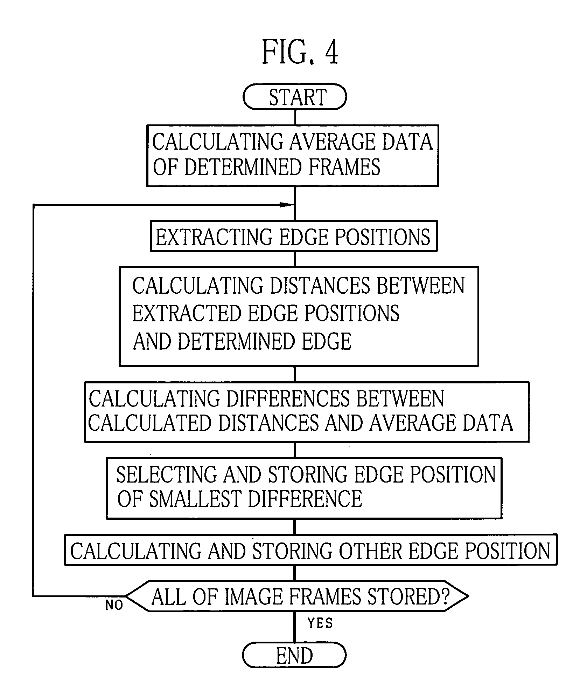

Fig. 4 shows an example of algorithm for extracting and judging the edge position. First of all, the edge positions are determined regarding the frames whose edges are clear. And then, on the basis of data of the determined edge positions, mean of data of frame positions is calculated regarding the determined frames. And then, on the basis of the mean data of the determined frames, edge-position candidates are extracted regarding the unconfirmed frame. Successively, distances between the edge-position candidates and the determined edge are calculated. Next, differences between the calculated distances and the above-noted mean are calculated. And then, the edge position having the smallest difference is selected and is stored as the determined edge position. Further, on the basis of the determined edge position, the other edge position of the image frame is calculated and stored. This operation is performed for all of the unconfirmed image frames. Incidentally, the algorithm for extracting and judging the edge position is not limited to the above-described algorithm. Another method for extracting the edge position and another algorithm for judgement may be used.

In the system controller 8, the frame-position judging part 41 defines the positions of the respective image frames on the basis of carrying amounts reckoned from the leading edge of the photographic film 28. Instead of the carrying amount reckoned from the leading edge, the position of each image frame may be defined by a number of perforations, which are formed between the leading edge and vicinity of the concerned frame, and an amount of the film carried until the edge from the nearest perforation thereof. In this case, accumulative error for carrying the film is small so that the positions of the respective frames are accurately defined. Instead of using the perforation as the reference, a frame-number bar code and a DX bar code may be used as the reference . In this case, the edge positions of the respective frames may be defined by an amount of the film carried from the bar code being as the reference.

The leading edge of the film having passed through the first reservoir 12 is forwarded to the film carrier 13 by the carrying roller pair 45. A read opening 13a is formed in the film carrier 13 and the film passage 24 is formed so as to pass the read opening 13a, which is provided with a carrier mask 51 for pressing the photographic film 28 at a time of image reading to secure planarity of the photographic film 28.

A leading-edge sensor 52, a frame sensor 53, a perforation sensor not shown, and a bar-code reader not shown are disposed at an upstream side of the carrier mask 51 and inside the film passage 24 of the film carrier 13. The frame sensor 53 identifies the frame position of each image when urgent interrupt operation is executed and the photographic film is directly inserted into a film inlet of the film carrier 13 without passing through the automatic film loader 11 and the reservoir 12. This urgent interrupt operation is different from the above-mentioned interrupt operation to be executed for additional loading of the automatic film loader 11. In the urgent interrupt operation, the respective units disposed at the upstream side of the film carrier 13 are temporarily halted and manual operation is executed by an operator. The leading-edge sensor 52 and the frame sensor 53 of the film carrier 13 respectively have a structure identical with that of the leading-edge sensor 35 and the frame sensor 36 disposed at the upstream side of the reservoir 12. Outputs of the sensors 52 and 53 are sent to the frame-position judging part 41 of the system controller 8. Similarly to the signals outputted from the leading-edge sensor 34 and the frame sensor 36, the frame-position judging part 41 detects the leading edge of the photographic film 28 and the edge position of the frame. Meanwhile, the perforation sensor detects the perforation of the photographic film 28. The bar-code reader reads the DX code and the frame-number bar code, which are recorded at a side portion of the photographic film 28.

The image reader 14 comprises a light source 60 and a scanner 61. The light source 60 illuminates the image frame set to the read opening 13a. The scanner 61 includes an imaging lens 61a and an area CCD sensor 61b disposed at an image-forming position of the imaging lens 61a. The area CCD sensor 61b is used for photometry of R(red), G(green) and B(blue). The image of each frame of the photographic film 28 is read by the area CCD sensor 61b. Image data of three colors R, G and B is outputted from the scanner 61 to the image processor 17.

The image processor 17 is constituted of a personal computer and comprises a keyboard 17a, a mouse 17b and a display 17c. As need arises, the keyboard 17a and the mouse 17b are operated to perform varied image processing, which concerns density correction, color correction and so forth, for the three-color image data outputted from the scanner 61. The processed image data is outputted to the laser printer 19 as recording image data. When the order information includes the instruction for writing the recording medium of the CD and so forth, the image processor 17 outputs the processed image data to the outside as an image file. For instance, the processed image data is outputted to a recording medium of a memory card, CDR, DVD and so forth, and is outputted to an external memory device of HDD and so forth. In the case of special printing of large-size printing, mug printing, composite printing and so forth, which are impossible to be dealt with in the current laboratory shop, the image data is temporarily stored in the laboratory-shop server 9. Special printing is performed by using a photographic printer of the large-scale affiliating laboratory shop and so forth via the Internet and the dedicated line. In this case, a shop capable of dealing with the special printing concerned is searched from the laboratory-system database 6. The images recorded in the film and the data of the order information thereof are transferred to the searched shop. The laboratory shop to which the data has been transferred performs printing on the basis of the order information and delivers products in a designated delivery manner.

The laser printer 19 comprises a laser-beam source for emitting laser beams of R, G and B respectively. The laser beam is modulated in accordance with the recording image data inputted from the image processor 17. The modulated laser beam is applied to the photographic paper to form an image (latent image) thereon by scanning exposure. For the photographic paper exposed by the laser printer 19, the processor 20 performs the respective processes of coloring/developing, bleaching/fixing, washing and drying. In virtue of this, the latent image formed on the photographic paper is developed and becomes a visible image. When the index print is designated, the laser printer 19 produces the index print on which the respective image frames of the photographic film are listed.

The photographic film 28 having passed through the film carrier 13 is forwarded to the film cutting inserter 16 via the second reservoir 15 having a structure identical with that of the first reservoir 12. The second reservoir 15 comprises a carrying roller pair 65 of an entrance side, a carrying roller pair 66 of an exit side, and a movable guide 67. In a loop space 68 formed between the carrying roller pairs 65 and 66, the photographic film 28 is temporarily contained in a loop shape. By the way, it is unnecessary that the second reservoir 15 contains a strip of the photographic film 28 similarly to the first reservoir 12. It is sufficient that the second reservoir 15 contains the photographic film 28 of a certain loop amount to absorb a processing-time difference, which is caused between a film-cutting time of the film cutting inserter 16 and a film-reading time of the film carrier 13.

The film cutting inserter 16 is provided with a leading-edge sensor 70 and a frame sensor 71. Signals from these sensors 70 and 71 are sent to the system controller 8. The frame sensor 71 identifies the frame position of each image when interrupt operation is executed and the photographic film 28 is directly inserted into a film inlet of the film cutting inserter 16 without passing through the automatic film loader 11, the first reservoir 12, the film carrier 13 and the second reservoir 15. The leading-edge sensor 70 and the frame sensor 71 respectively have a structure identical with that of the leading-edge sensor 35 and the frame sensor 36 disposed at the upstream side of the reservoir 12. Outputs of the sensors 70 and 71 are sent to the frame-position judging part 41 of the system controller 8 to detect the leading edge of the photographic film 28 and the edge position of the frame.

The film cutting inserter 16 comprises a cutter 75, film-sheet carrier 76 and an insert roller pair 77. The cutter 75 cuts the photographic film 28 to produce a piece film 78 including six image frames, for example. At this time, all the frame positions of the filmstrip are detected by the frame sensor 36. The frame positions are identified on the basis of the detection result of the frame sensor 36, and cutting positions are determined on the basis of the identified frame positions so as to cut the photographic film every six frames.

The film-sheet carrier 76 draws a film sheet 81 from a film-sheet roll 80 by using a sheet-carrying roller pair, which is not shown, to place a film pocket 81a of the film sheet 81 at the position of the insert roller pair 77. The film-sheet roll 80 is formed by taking up the film sheet 81 in a roll form. The film sheet 81 has a large number of the film pockets 81a arranged side by side. The insert roller pair 77 inserts the piece film 78 into the film pocket 81a. After that, the film-sheet carrier 76 advances the film sheet 81 by a width of the film pocket. By virtue of this, the next vacant film pocket 81a is set to the film-inserting position. And then, cutting and inserting the photographic film 28 are similarly performed. When the strip of the photographic film 28 has been cut and inserted into the film sheet 81, a cutter not shown cuts the film sheet 81 at a boundary of the film pockets 81a into which the cut strip of the photographic film 28 is inserted.

Next, an operation of the above embodiment is described below. First of all, when receiving the photographic film 28, the display 3c shows a name of the ordering person, a telephone number thereof, and the order contents inputted from the order-receiving main unit 3. After confirming the order contents, a determination button or the like is pressed to perform a confirmation operation. Upon this, the order contents are determined and are sent to the order-information database 7. In addition, the receipt 37 is printed by the receipt printer 5 and is issued to the ordering person. Further, the check label 21 is printed by the check-label printer 4 and is attached to the leading portion 28a of the received photographic film 28, such as shown in Fig. 2.

After receiving the photographic film 28, a well-known film processor processes the photographic film 28. The processed photographic films 28 are stacked in a processed order or at random, and are set to the automatic film loader 11. At this time, it is unnecessary to perform sorting of the preparation for gathering the photographic films having the same order contents in lump so that the printing process is simplified. The film bundle 29 is set in the automatic film loader 11 such that the leading edges of the photographic films 28 coincide and a photosensitive emulsion surface thereof faces upward.

In response to the scan feasible signal outputted from the film carrier 13, the automatic film loader 11 rotates the feed roller 26 to advance the photographic film 28 from the film bundle 29 one by one. The photographic film 28 is carried toward the film carrier 13 by the carrying roller pair 27. At this time, the bar-code sensor 34 reads out the bar code 23 of the check label 21 attached to the leading portion 28a of the photographic film 28. The bar-code read signal is sent to the system controller 8. On the basis of the order identification number of the bar code 23, the controller 8 searches the corresponding print-order contents from the memory of the order-information database to perform the printing process on the basis of the print-order contents and to write the image data in the CDR on the basis thereof.

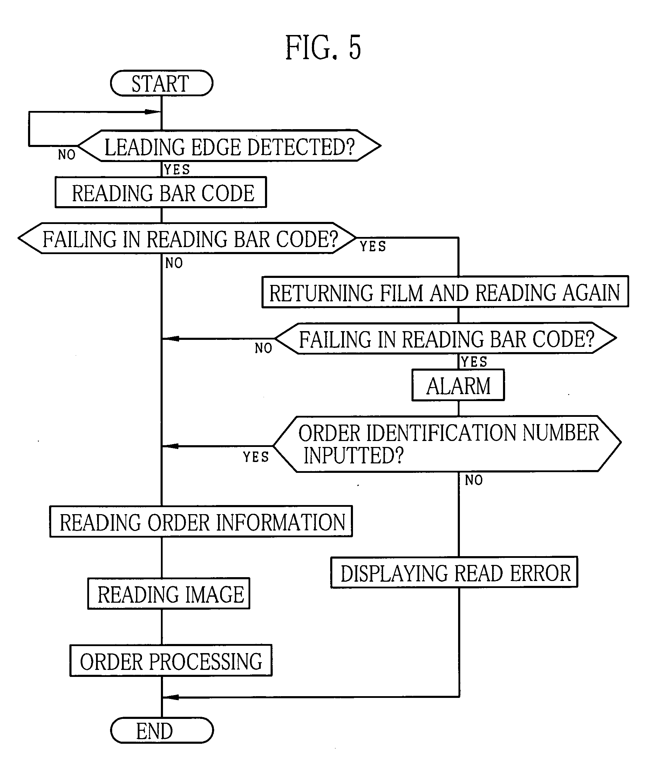

Fig. 5 is a flowchart showing the process for reading the bar code. Upon detecting the leading edge of the photographic film 28 with the leading-edge sensor 35, reading the bar code 23 is started. If the bar-code sensor 34 fails to read the bar code 23, the film is returned, and the bar-code sensor 34 reads the bar code 23 again while the film is returned or while the film is re-carried. If the bar-code sensor 34 fails to read the bar code again, an alarm is raised and reading the bar code is performed by an operator. In this case, the photographic film 28 is stopped at a position where the operator can read the bar code 23, and in this state, key input is performed. The operator reads the order identification number of the check label 21 and inputs this number with keys. The key-inputted order identification number is shown on the display 17c of the image processor 17. If there is no mistake, a determination key is operated to complete the input of the order information number. And then, carrying the photographic film 28 is resumed. By the way, in the case failing to read the bar code 23, the process for reading the bar code again may be abbreviated. In this case, the alarm is raised at once and the inputting process is performed by the operator.

Meanwhile, on the basis of the output signals of the leading-edge sensor 35 and the first frame sensor 36, the system controller 8 identifies the edge positions of the respective image frames based on the film advancement amount reckoned from the leading edge of the photographic film 28. The edge positions are extracted by the frame-position judging part 41 on the basis of the fluctuation of the density, which is detected by the respective light-receiving sensors in the longitudinal direction of the film. Data of the edge position is stored in a memory of the system controller 8.

The leading edge of the photographic film 28 passes the movable guide 33 and further passes the downstream carrying roller pair 31. After that, the movable guide 33 is moved from the guide position to the evacuation position. By virtue of the evacuation of the movable guide 33, the photographic film 28 is contained in the loop space 32. The frame sensor 36 identifies the positions of the respective image frames included in the strip of the photographic film. After identifying the frame positions, data thereof is written in the memory of the system controller 8 and the photographic film 28 is advanced to the film carrier 13 by the carrying roller pairs 31 and 45. In the film carrier 13, the respective frames are sequentially set to the read opening 13a in association with the film advancement amount based on the film-leading-edge detection signal of the leading-edge sensor 52 so that the film scanner 61 reads the respective image frames. The respective image frames are set to the read position of the film carrier 13 on the basis of the data of the image-frame positions after identifying the positions of the image frames included in the strip of the photographic film 28. Thus, it is possible to surely set the respective image frames to the read position.

The photographic film 28 from which the images have been read is forwarded to the film cutting inserter 16 and is cut every six frames on the basis of the position data of the respective image frames detected by the frame sensor 36. The cut photographic film 28 is inserted into the film sheet 81. The photographic film 28 is cut every six frames on the basis of the image-frame position data after the frame sensor 36 has identified the positions of the image frames included in the strip of the photographic film 28. Thus, the photographic film 28 is surely cut every six frames at intervals of the adjacent image frames.

After reading the images of the respective image frames, the image output machine 18 produces the photographic prints on the basis of the image data of the respective image frames. The photographic print is produced along the order contents previously specified by the order identification data of the check label 21. For example, in the laser printer 19 , the photographic papers are cut in accordance with the print size and the print number. The cut papers are forwarded to a scanning-exposure unit, wherein the photographic papers having a suitable kind of the paper surface are printed by the designated number on the basis of the image data of the photographic film. By the way, even if the photographic paper having an unsuitable kind to the ordered paper surface are set, the image input unit 10 continues inputting the image. In this case, the image data is transferred to the laboratory-shop server 9 via the image processor 17 and is accumulated therein. And then, after printing all the photographic papers set in the laser printer 19, an alarm for notifying paper exchange is raised, and the photographic papers having a predetermined kind of the paper surface are set. After that, the corresponding image data is read from the laboratory-shop server 9 to perform printing for the different kind of the paper surface.

In the meantime, when the index print is designated, an index image showing a list of the respective image frames is produced, and scanning exposure of the index image is performed by the laser printer 19. Further, when writing the CD is designated, the respective image frames of the photographic film are written in the CDR at the image processor 17.

When the special printing of the large-size printing, the mug printing, the composite printing and so forth are selected and this special printing is incapable of being dealt with in the current laboratory shop for reasons of none of special printer and so for, an affiliating laboratory shop capable of dealing with the corresponding printing is searched in the laboratory-system database 6. The data is transferred to the searched laboratory shop via the Internet or the dedicated line to perform the special printing of the large-size printing, the mug printing, the composite printing and so forth.

When the photographic film needing the unexpected processing of urgent finish, interrupt finish and so forth is received during image reading of the other photographic film, the additional loading portion 25a of the film holder 25 is opened and the photographic film of the urgent finish is additionally loaded thereinto. In virtue of this, it is possible to easily perform the interrupt operation. Since the photographic films may be loaded into the film holder 25 at random in the present invention, the already-loaded film bundle 29 may be drawn out and the photographic film of the interrupt operation may be loaded into the foremost position of the drawn film bundle 29. In this case, the photographic film of the interrupt operation becomes readable next to the currently-read photographic film.

In the above embodiment, the sole image output machine 18 is employed. However, a plurality of image output machines, which accept different paper sizes and different kinds of the paper surface, may be employed. In this case, the image output machines are connected to the image processor 17 and to the laboratory-shop server 9, and are selectively used in accordance with the order information.

In the above embodiment, after inputting the order information by the order-receiving main unit 3, the order identification number for identifying the order information is newly allocated to print the check label having the order identification number and the bar code thereof. Alternatively, after a written envelope has been conventionally received, the order information of the received envelope may be inputted by the order input unit 2. In this case, the check labels 21 printed in advance are attached to the envelope and the leading portion of the photographic film 28 at the time of the reception. The order identification number of the attached check label 21 is read and is inputted by the keys. After that, the order contents of the envelope are inputted by means of key input. The order identification number and the order information are stored in the memory 3d of the order-receiving main unit 3 so as to be related to each other. Instead of visually reading the order identification number by the operator, the order identification number may be inputted from the bar code. In this case, a handheld bar-code reader 3e may be provided such as shown in Fig. 1.

In the above embodiment, the order-receiving unit 2 is employed. However, instead of employing the order-receiving unit 2, the image processor 17 may have an order-receiving function. In this case, the operator handles the keyboard 17a, the mouse 17b and so forth along input guidance, which is shown on the display 17c or is notified by voice, to input the order information. The inputted order information is stored in the memory 17d of the image processor 17 together with the order identification number.

In the above embodiment, when the bar-code reader 34 fails in reading the bar code 23, the alarm is raised and the operator visually confirm and manually input the order identification data. However, instead of this, the bar-code reader 34 may be detachably attached to the passage and the operator may detach the bar-code reader 34 at the time of failure in reading the bar code 23 to manually read the bar code 23 with the detached bar-code reader 34. In virtue of this, it is possible to surely and easily read the bar code 23.

Meanwhile, when the check label 21 of the photographic film 28 passes the bar-code reader 34, the photographic film 28 may be stopped or a carrying speed thereof may be switched to a lower speed for the purpose of surely reading the bar code 23.

In the above embodiment, the memory 17d of the image processor 17 may store total-frame-number information of the photographic film 28 obtained by the frame sensor 36 to print a total print number, a print fee based thereon and so forth on the final or first print during the printing process. Instead of or in addition to printing the total print number, a print number combining the frame number with "/" and " total print number" may be printed on the rear surface of the respective photographic prints.

When there is a mismatch between the order contents and the photographic paper used in the above embodiment and when jamming and defective carrying of the photographic film 28 are caused, the order identification data of the check label concerned may be indicated on the display 17c of the image processor 17 to notify the operator of failure in image reading and printing.

The used bar code 23 is a general bar code comprising the heavy line and a thin line. Instead of this, it is possible to use a two-dimensional bar code, in which dot arrangement is changed, and the other various codes capable of being mechanically read. Further, an IC tag may be used instead of the bar code 23. In this case, an IC-tag reader is employed instead of the bar-code reader 34.

In the above embodiment, the photographic film from which the images have been read is cut by the automatic film cutter into the piece films. Instead of this, an automatic film catcher may receive the photographic film, and after that, the photographic film may be cut by a film cutter into the piece films.

Although the present invention has been fully described by way of the preferred embodiments thereof with reference to the accompanying drawings, various changes and modifications will be apparent to those having skill in this field. Therefore, unless otherwise these changes and modifications depart from the scope of the present invention, they should be construed as included therein.

## Claims

1. A photographic film processor using a photographic film (28) to which order identification data (23) for identifying a print order is attached, an image recorded on said photographic film being read by an image reader (14) and order processing being performed on the basis of data of the read image, said photographic film processor comprising:
an order-information inputting device (2) for inputting order information of said print order so as to relate the order information to said order identification data;
a storage (7) for storing the inputted order information to which said order identification data is annexed;
a film feeder (11) for feeding said photographic film having the attached order identification data to said image reader;
an identification-data reader (34) placed at said film feeder, said identification-data reader reading said order identification data attached to said photographic film; and
a controller (8) for reading said order information from said storage on the basis of said order identification data read by said identification-data reader, said controller performing said order processing in accordance with said order information.

2. A photographic film processor according to claim 1, wherein said photographic film is reciprocated in a case that said identification-data reader fails to read said order identification data, and reading said order identification data is performed again.

3. A photographic film processor according to claim 1, wherein feeding said photographic film is halted in a case that said identification-data reader fails to read said order identification data, and an alarm is raised to urge an operator to input said order identification data.

4. A photographic film processor according to claim 1, wherein said order identification data is represented by a bar code (23) recorded on a check label (21) attached to said photographic film, and said identification-data reader is a bar-code reader for reading said bar code.

5. A photographic film processor according to claim 4, wherein said bar-code reader is detachable and is detached in a case of failure in reading said bar code, an operator manually reading said bar code by using the detached bar-code reader.

6. A photographic film processor according to claim 4 , wherein said check label is attached to a leading portion of said photographic film.

7. A photographic film processor according to claim 1, wherein said film feeder is an automatic film loader for containing strips of the photographic film in a stack state and for automatically feeding the strip.

8. A photographic film processor according to claim 7, wherein said automatic film loader has an additional loading portion (25a) into which the photographic film is allowed to be additionally loaded from a side opposite to a film-feeding side.

9. A photographic film processor according to claim 8, wherein said additional loading portion is loaded with the photographic film needing interrupt processing.

10. A photographic film processor according to claim 7, wherein said automatic film loader comprises a roller (26) for drawing the stacked photographic films one by one, and said identification-data reader reads said order identification data of the photographic film drawn by said roller.

11. A photographic film processor according to claim 1, wherein said order-information inputting device comprises a keyboard (3a) for inputting said order information.

12. A photographic film processor according to claim 11, wherein said order-information inputting device further comprises a display (3c) for showing the inputted order information.

13. A photographic film processor according to claim 12, wherein said order-information inputting device includes a memory (3d) for storing the inputted order information, the order information shown on said display being sent from said memory to said storage after determination thereof.

14. A photographic film processor according to claim 13, wherein said storage is an order-information database in which said order information is stored.
